# EUROPEAN PATENT APPLICATION

(11) **EP 1 897 862 A1**
(43) Date of publication of application: **12.03.2008**
(21) Application number: 06018596.4
(22) Date of filing: 05.09.2006
(51) Int. Cl.: C03C 25/24, B29C 70/08

(54) **Mineral wool composite moldings**

(71) Applicant: Rockwool International A/S, 2640 Hedehusene (DK)
(72) Inventor: Daschkeit, Axel, 59192 Bergkamen (DE); Hansen, Erling Lennart, 2820 Gentofte (DK)
(74) Representative: Barz, Peter

(57) **Abstract**

A mineral wool composite molding comprises one or more mineral wool layers based on man-made vitreous fibres (MMVF) which are bonded by a formaldehyde-free polymeric binder system, and at least one other composite layer.

## Description

### Field of the Invention

The present invention relates to composite moldings comprising a mineral wool layer based on man-made vitreous fibres (MMVF) which are bonded by a formaldehyde-free polymeric binder system. More particularly, the present invention relates to composite moldings for use in automobiles, trucks, busses, trains and other ground vehicles, in aircrafts and water crafts, especially for use in the interior of such vehicles. The invention is also concerned with semifinished products which are suitable for the production of such composite moldings.

### Background of the Invention

Automotive parts are often produced from bonded and coated fibre nonwovens. For example, a core layer of polyurethane foam is sandwiched between two layers of a bonded nonwoven composed of a blend of natural fibres and synthetic fibres or of a mineral wool batt, and the sandwich composite is then pressed in a heated press to give an automotive molding; see, for instance, US 2004/0161597 A1. The moldings may be further processed, for instance, by applying a decorative finishing layer by means of an adhesive; see, e.g., US-A-4,824,714.

A typical application of such composite moldings is represented by all lining and fitting elements of car interiors such as, for example, the self-supporting lining for the cabin roof (headliner), the door panels, trim panels, instrument panels, rear shelf, boot or hatchback-door linings, sun-shields, parcel shelves and generally all lining and fitting elements of car interiors, for which certain requisites must be satisfied such as lightness, self-supporting properties, acoustic insulation and/or flexibility.

Recently, automotive industry has introduced a so-called "negative list" of substances which may not be used in the production of automotive parts, or may be used, upon special approval, for the production of specific systems. In the latter case, declaration of the use of such substances is required.

The "negative list" of substances refers, inter alia, to phenol and formaldehyde. Formaldehyde is emitted from insulating materials based on mineral fibres bonded with conventional phenol/formaldehyde resin binders. Accordingly, there existed a need for improved mineral wool composite moldings using binders that are free from formaldehyde and phenol emissions.

### Summary of the Invention

An object of the present invention is therefore to provide mineral wool composite moldings comprising a mineral wool layer based on bonded man-made vitreous fibres (MMVF) which are not associated with the health hazards of prior art mineral wool composite moldings, particularly, in terms of formaldehyde and phenol emission.

Another object of the present invention is to provide semifinished products which are suitable for the production of such composite moldings.

These and other objects are achieved in accordance with the present invention by providing a mineral wool composite molding which comprises one or more mineral wool layers based on man-made vitreous fibres (MMVF) bonded by a formaldehyde-free polymeric binder system, and at least one other composite layer.

In another aspect, the present invention relates to a semifinished product suitable for manufacturing such a mineral wool composite molding, wherein the formaldehyde-free polymeric binder system is not cured or incompletely cured.

The mineral wool composite moldings according to the present invention may be produced in an economical manner without requiring means for avoiding or removing hazardous formaldehyde and phenol emissions, even at increased temperatures. They are therefore suitable for use in automobiles, trucks, busses, trains and other ground vehicles, in aircrafts and water crafts, especially in the interior of such vehicles. Owing to their high thermal stability they are also useful in applications which involve exposure to increased temperatures such as, for instance, as acoustic and/or thermal insulation for exhaust systems and engine-hoods of motor vehicles. The mineral wool composite moldings according to the present invention have been found to exhibit superior lamination strength which makes them particularly suitable for the intended purposes.

In view of their advantageous properties, the mineral wool composites according to the present invention are also suitable for use in other fields, for instance, as parts of domestic appliances (refrigerators, dish washers, washing machines, driers, ovens, stoves, etc.) and of heating systems (convectors, stoves, air-conditioners, etc.)

### Description of the preferred embodiments

The mineral wool composite molding according to the present invention comprises one or more mineral wool layers based on man-made vitreous fibres (MMVF) which are bonded by a formaldehyde-free polymeric binder system.

Suitable MMVF comprise, for instance, glass wool, glass filaments, ceramic fibres, basalt fibres, slag wool, stone wool, rock wool and other types of man-made vitreous fibres.

The term "formaldehyde-free" as used in connection with the binder system, is meant to indicate that the binder composition is substantially free from formaldehyde, and does not liberate substantial formaldehyde as a result of drying and/or curing. Typically, less than about 1 ppm formaldehyde, based on the weight of the composition, is present in a formaldehyde-free composition.

### First embodiment of MMVF binder

In a first embodiment of the present invention, the formaldehyde-free polymeric binder system comprises the water-soluble reaction product of an alkanolamine with a carboxylic anhydride obtainable by reacting at least one alkanolamine with at least one carboxylic anhydride and, optionally, treating the reaction product with a base.

Preferred alkanolamines for use in the preparation of this binder system are alkanolamines having at least two hydroxy groups such as, for instance, alkanolamines represented by the formula 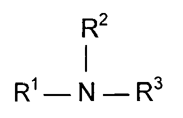 wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

If two different anhydrides are employed, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3. Curing tests with the system THPA/TMA have surprisingly shown that a lower molar ratio of THPA to TMA results in a higher curing speed.

In the preparation of the binder composition, the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6. By employing these minimum ratios, a too high excess of free unreacted acid is avoided which under specific conditions could lead to a displacement of binder in the curing oven, i.e. to a non-uniform distribution in amount of binder between the bottom and top of the mineral wool mat or web. Furthermore, high amounts of unreacted acid may increase corrosiveness.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. In general, the final binder composition has an equivalent ratio of (NH+OH) / (COOH) within the range of from 1.25 to 1.55.

The reaction between the alkanolamine and carboxylic anhydride reactants is carried out in the usual manner, for instance, as described in WO 99/36368, WO 01/05725, WO 01/96460, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA), triethanolamine (TEA) and dimethylethanolamine (DMEA). The base is preferably added to the reaction mixture after the reaction between the alkanol amine and the carboxylic anhydride has been actively stopped by adding water.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

### Second embodiment of MMVF binder

In a second embodiment of the present invention, the formaldehyde-free polymeric binder system is an aqueous binder composition comprising:
(a) a polyacid component having acid groups, or anhydride or salt derivatives thereof; and
(b) a polyhydroxy component having hydroxyl groups;
wherein the pH of the binder composition is greater than about 7 and is preferably within the range of from about 7 to about 10.

In an illustrative embodiment, the composition includes a polyacid component and a polyhydroxy component where the ratio of the number of molar equivalents of acid groups, or anhydride or salt derivatives thereof, present on the polyacid component to the number of molar equivalents of hydroxyl groups present on the polyhydroxy component is in the range from about 0.6 : 1 to about 1.2 : 1.

In another illustrative embodiment, the composition includes a polyacid component that is a dicarboxylic acid, including, but not limited to, unsaturated aliphatic dicarboxylic acids, saturated aliphatic dicarboxylic acids, aromatic dicarboxylic acids, unsaturated cyclic dicarboxylic acids, saturated cyclic dicarboxylic acids, hydroxy-substituted derivatives thereof, and the like. In another illustrative embodiment, the composition includes a polyacid component that is a tricarboxylic acid, including, but not limited to, unsaturated aliphatic tricarboxylic acids, saturated aliphatic tricarboxylic acids, aromatic tricarboxylic acids, unsaturated cyclic tricarboxylic acids, saturated cyclic tricarboxylic acids, hydroxy-substituted derivatives thereof, and the like. In another illustrative embodiment, the composition includes a polyacid component that is a tetracarboxylic, pentacarboxylic, and like polycarboxylic acids, and salts and anhydride derivatives thereof, and combinations thereof. It is appreciated that any of these polyacids may be optionally substituted, such as with hydroxy, halo, alkyl, alkoxy, and the like.

Illustrative polyacid components are dicarboxylic acids, such as, for example, maleic acid. Other suitable polyacid components are contemplated to include, but are not limited to, aconitic acid, adipic acid, azelaic acid, butane tetracarboxylic acid dihydride, butane tricarboxylic acid, chlorendic acid, citraconic acid, citric acid, dicyclopentadiene-maleic acid adducts, diethylenetriaminepentaacetic acid, adducts of dipentene and maleic acid, endomethylenehexachlorophthalic acid, ethylenediamine tetraacetic acid (EDTA), fully maleated rosin, maleated tall oil fatty acids, fumaric acid, glutaric acid, isophthalic acid, itaconic acid, maleated rosin-oxidize unsaturation with potassium peroxide to alcohol then carboxylic acid, malic acid, mesaconic acid, biphenol A or bisphenol F reacted via the KOLBE-Schmidt reaction with carbon dioxide to introduce 3-4 carboxyl groups, oxalic acid, phthalic acid, polylactic acid, sebacic acid, succinic acid, tartaric acid, terephthalic acid, tetrabromophthalic acid, tetrachlorophthalic acid, tetrahydrophthalic acid, trimellitic acid, and trimesic acid, and anhydrides and salts thereof, and combinations thereof.

In an illustrative embodiment, the acid groups of the polyacid component of the formaldehyde-free, thermally curable, alkaline, aqueous binder composition are neutralized with a base, and thereby converted to acid salt groups, prior to their reaction with the hydroxyl groups of the polyhydroxy component to form the polyester resin. It is understood that complete neutralization, i.e., about 100% calculated on an equivalents basis, may eliminate any need to titrate or partially neutralize acid groups in the polyacid component prior to polyester formation, but it is anticipated that less-than-complete neutralization would not inhibit formation of the polyester.

"Base" as used herein, refers to a base which may be substantially volatile or non-volatile under conditions sufficient to promote formation of the polyester. Illustratively, the base may be a volatile base, such as, for example, aqueous ammonia ; alternatively, the base may be a non-volatile base, such as, for example, sodium carbonate, and other non-volatile bases, such as sodium hydroxide, potassium hydroxide, and the like are contemplated. Neutralization may be carried out either before or after the polyacid component is mixed with the polyhydroxy component.

In one illustrative aspect, the composition is an alkaline composition, where the polyacid component is neutralized by the addition of a base or where certain salts of the polyacid component are used. In another illustrative embodiment, the composition includes a polyacid component, such as succinic acid, citric acid, or fumaric acid and the like that has been neutralized by the addition of a base, or is a salt. In another illustrative embodiment, the polyacid component is maleic acid neutralized with, for example, aqueous ammonia. In another illustrative embodiment, the polyacid component is the ammonium salt of maleate.

The formaldehyde-free, thermally curable, alkaline, aqueous binder composition also includes a polyhydroxy component having hydroxyl groups. In one aspect, the polyhydroxy component is sufficiently nonvolatile to maximize its ability to remain available for reaction with the polyacid component. The polyhydroxy component may be a polyvinyl alcohol, a partially hydrolyzed polyvinyl acetate, such as, for example, an ELVANOL® (available from DuPont Packaging and Industrial Polymers; Wilmington, Delaware; USA), or a mixture thereof.

In an illustrative embodiment, the formaldehyde-free, thermally curable, alkaline, aqueous binder composition may also include a catalyst capable of increasing the rate of polyester formation during curing of the binder compositions described herein. Illustratively, the catalyst may be an ammonium salt, such as, for example, ammonium para-toluene sulfonate or ammonium naphthalene disulfonate. Other suitable catalysts are contemplated to include, but are not limited to, ammonium sulfate, ammonium chloride, sulfuric acid, lactic acid, lead acetate, sodium acetate, calcium acetate, zinc acetate, organotin compounds, titanium esters, antimony trioxide, germanium salts, sodium hypophosphite, sodium phosphite, methanesulfonic acid and para-toluenesulfonic acid, and mixtures thereof.

In an illustrative embodiment, the formaldehyde-free, thermally curable, alkaline, aqueous binder composition may also include a silicon-containing coupling agent, e.g., an organosilicon oil, a silylether or alkylsilyl ether. In one aspect, the silicon-containing compound is an amino-substituted silane, such as, for example, gamma-aminopropyltriethoxy silane.

As described in WO 2005/087837, the formaldehyde-free, thermally curable, alkaline, aqueous binder composition according to the second embodiment may be prepared by admixing a 10-50 weight percent aqueous solution of a polyacid component, already neutralized or neutralized in the presence of the polyhydroxy component, a 10-30 weight percent aqueous solution of a polyhydroxy component, and, if desired, an aqueous solution of a catalyst capable of increasing the rate of polyester formation during curing, and also, if desired, a silicon-containing coupling agent. By varying the polyacid component, the polyhydroxy component, and optional catalyst and silicon-containing coupling agent compositions, the initial concentrations thereof, and the mixing ratio of solutions, a wide range of binder solution compositions can be prepared, wherein the pH of the binder composition is alkaline, and preferably in the range from about 7 to about 10.

### Third embodiment of MMVF binder

In a third embodiment of the present invention, the formaldehyde-free polymeric binder system is a binder composition comprising a polycarboxy polymer (especially a polyacrylic acid polymer), a polyhydroxy crosslinking agent, and a surfactant selected from the group consisting of cationic surfactants, amphoteric surfactants, nonionic surfactants, and mixtures thereof.

The binder composition is prepared by polymerization of monomers (preferably acrylic acid) emulsified in water using conventional emulsion polymerization procedures. Suitable surfactants are used for emulsification of the monomers, including cationic, amphoteric or nonionic surfactants, and mixtures thereof, with nonionic surfactants being preferred.

The binder composition comprises an organic polymer or oligomer containing a plurality of pendant carboxy groups which may be a homopolymer or copolymer prepared from unsaturated carboxylic acids including acrylic acid, methacrylic acid, crotonic acid, isocrotonic acid, maleic acid, cinnamic acid, 2-methylmaleic acid, itaconic acid, 2-methylitaconic acid, and the like. Alternatively, the polycarboxy polymer may be prepared from unsaturated anhydrides including maleic anhydride, itaconic anhydride, acrylic anhydride, methacrylic anhydride, and the like, as well as mixtures thereof.

The low molecular weight polycarboxy polymer produced in the first step of the process is reacted with a polyhydroxy crosslinking agent, such as triethanolamine, glycerol, trimethylolpropane, 1,2,4-butanetriol, ethyleneglycol, 1,3-propanediol, 1,4-butanediol, 1,6-hexanediol, pentaerythritol, sorbitol, and the like. No catalyst is necessary in this crosslinking step.

The polycarboxy polymer, polyhydroxy crosslinking agent and surfactant may be mixed in a conventional mixing device. The polycarboxy polymer may be present at a concentration from about 5% to about 50% by weight, preferably from about 10% to about 30% by weight, based on the total weight of the mixture. Water may be added to the solids mixture in any amount which would produce an aqueous binder having a viscosity and flow rate suitable for its application to a forming fibrous glass mat by any convenient method, such as by spraying. Conveniently, water may comprise up to about 98% by weight of the binder.

Examples of useful cationic surfactants include alkylamine salts such as laurylamine acetate, quaternary ammonium salts such as lauryl trimethyl ammonium chloride and alkyl benzyl dimethylammonium chlorides, and polyoxyethylene-alkylamines. Examples of the amphoteric surfactants are alkylbetaines such as lauryl-betaine.

Examples of suitable nonionic surfactants are polyethers, e.g., ethylene oxide and propylene oxide condensates which include straight and branched chain alkyl and alkaryl polyethylene glycol and polypropylene glycol ethers and thioethers; alkylphenoxypoly(ethyleneoxy)ethanols having alkyl groups containing from 7 to 18 carbon atoms and having from about 4 to about 240 ethyleneoxy units, such as heptylphenoxypoly(ethyleneoxy) ethanols, nonylphenoxypoly(ethyleneoxy) ethanols; the polyoxyalkylene derivatives of hexitol including sorbitans, sorbides, mannitans, and mannides; partial long-chain fatty acids esters, such as the polyoxyalkylene derivatives of sorbitan monolaurate, sorbitan monopalmitate, sorbitan monostearate, sorbitan tristearate, sorbitan monooleate, and sorbitan trioleate; the condensates of ethylene oxide with a hydrophobic base, said base being formed by condensing propylene oxide with propylene glycol; sulfur containing condensates, e.g., those prepared by condensing ethylene oxide with higher alkyl mercaptans, such as nonyl, dodecyl, or tetradecyl mercaptan, or with alkylthiophenols wherein the alkyl group contains from about 6 to about 15 carbon atoms; ethylene oxide derivatives of long-chain carboxylic acids, such as lauric, myristic, palmitic, or oleic acids or mixtures of acids, such as tall oil fatty acids; ethylene oxide derivatives of long-chain alcohols such as octyl, decyl, lauryl, or cetyl alcohols; and ethylene oxide/propylene oxide copolymers.

The amounts of surfactants employed in the emulsion polymerization process will range from about 0.01 to about 10 weight percent, preferably about 0.2 to about 5 weight percent based on the total weight of monomers and water.

As described in US-A-2004/0152824, the polyacrylic acid and the polyhydroxy crosslinking agent may be mixed with water in a conventional mixing device. Water may be added to the mixture of acrylic acid monomer and polyhydroxy crosslinking agent in any amount which produces an aqueous binder mixture having a viscosity and flow rate suitable for application to a forming fibrous glass mat by any convenient method, e.g., spraying.

### Fourth embodiment of MMVF binder

In a fourth embodiment of the present invention, the formaldeyhde-free polymeric binder system is a heat-curable aqueous composition comprising
- at least one carboxyl-containing addition copolymer synthesized from
- 50 to 99.5% by weight of at least one ethylenically unsaturated mono- and/or dicarboxylic acid,
- 0.5 to 50% by weight of at least one ethylenically unsaturated compound selected from esters of ethylenically unsaturated monocarboxylic acids and monoesters and diesters of ethylenically unsaturated dicarboxylic acids with an amine having at least one hydroxyl group,
- up to 20% by weight of at least one further monomer,
- at least one β-hydroxyalkylamine of relatively high functionality, and
- if desired, at least one surfactant.

The carboxyl-containing copolymers used in these binder compositions therefore incorporate from 50 to 99.5% by weight, preferably from 70 to 99% by weight, of structural units derived from ethylenically unsaturated monocarboxylic acids, ethylenically unsaturated dicarboxylic acids and/or their monoesters with C₁ to C₂₂ alkanols. In the copolymer, these acids may be wholly or partly in the form of a salt. The acidic form is preferred.

In the preparation of the carboxyl-containing copolymer, it is possible to use not only the above-mentioned monomers but also the anhydrides of the ethylenically unsaturated monocarboxylic acids and the anhydrides of the ethylenically unsaturated dicarboxylic acids.

Particularly preferred monomers for preparing the carboxyl-containing copolymers are maleic acid, maleic anhydride, acrylic acid, methacrylic acid, acrylic anhydride, methacrylic anhydride, itaconic acid, tetrahydrophthalic acid and the anhydrides thereof, and also the alkali metal salts and ammonium salts or mixtures thereof.

With particular preference, the copolymer incorporates structural elements derived from acrylic acid or of a mixture of acrylic acid and maleic acid in a ratio of from 95:5 to 40:60, in particular in a ratio of from 90:10 to 50:50.

The copolymer used in the compositions further contains from 0.5 to 50% by weight, preferably from 1 to 30% by weight, of at least one ethylenically unsaturated compound selected from esters of ethylenically unsaturated monocarboxylic acids and monoesters and diesters of ethylenically unsaturated dicarboxylic acids with at least one hydroxyl-containing amine, in copolymerized form.

Monocarboxylic acids suitable as components of the esters are the above-mentioned C₃ to C₁₀ monocarboxylic acids, especially acrylic acid, methacrylic acid, crotonic acid and mixtures thereof.

Dicarboxylic acids suitable as components of the monoesters and diesters are the above-mentioned C₄ to C₈ dicarboxylic acids, especially fumaric acid, maleic acid, 2-methylmaleic acid, itaconic acid, and mixtures thereof.

The amine having at least one hydroxyl group is preferably selected from secondary and tertiary amines containing at least one C₆ to C₂₂ alkyl, C₆ to C₂₂ alkenyl, aryl-C₆ to C₂₂ alkyl or aryl-C₆ to C₂₂ alkenyl radical, it being possible for the alkenyl group to have 1, 2 or 3 nonadjacent double bonds.

The amine is preferably hydroxyalkylated and/or alkoxylated. Alkoxylated amines preferably have one or two alkylene oxide residues with terminal hydroxyl groups. Preferably, the alkylene oxide residues each have from 1 to 100, preferably from 1 to 50, identical or different alkylene oxide units, distributed randomly or in the form of blocks. Preferred alkylene oxides are ethylene oxide, propylene oxide and/or butylene oxide. Ethylene oxide is particularly preferred.

The polymer preferably comprises an unsaturated compound based on an amine component incorporating at least one amine of the formula

R^{c}NR^{a}R^{b}

where
R^{c} is C₆ to C₂₂ alkyl, C₆ to C₂₂ alkenyl, aryl-C₆-C₂₂ alkyl or aryl-C₆-C₂₂ alkenyl, it being possible for the alkenyl radical to have 1, 2 or 3 nonadjacent double bonds,
R^{a} is hydroxy-C₁-C₆ alkyl or a radical of the formula II

   -(CH₂CH₂O)ₓ(CH₂CH(CH₃)O)_{y}-H (II)
where
in the formula II the sequence of the alkylene oxide units is arbitrary and x and y independently of one another are integers from 0 to 100, preferably from 0 to 50, the sum of x and y being > 1,
R^{b} is hydrogen, C₁ to C₂₂ alkyl, hydroxy-C₁-C₆ alkyl, C₆ to C₂₂ alkenyl, aryl-C₆-C₂₂ alkyl, aryl-C₆-C₂₂ alkenyl or C₅ to C₈ cycloalkyl, it being possible for the alkenyl radical to have 1, 2 or 3 nonadjacent double bonds,
or R^{b} is a radical of the formula III

   -(CH₂CH₂O)ᵥ(CH₂CH(CH₃)O)_{w}-H (III)
where
in the formula III the sequence of the alkylene oxide units is arbitrary and v and w independently of one another are integers from 0 to 100, preferably from 0 to 50.

Preferably R^{c} is C₈ to C₂₀ alkyl or C₈ to C₂₀ alkenyl, it being possible for the alkenyl radical to have 1, 2 or 3 nonadjacent double bonds. R^{c} is preferably the hydrocarbon radical of a saturated or mono- or polyunsaturated fatty acid. Preferred radicals R^{c} are, for example, n-octyl, ethylhexyl, undecyl, lauryl, tridecyl, myristyl, pentadecyl, palmityl, margarinyl, stearyl, palmitoleinyl, oleyl and linolyl.

With particular preference, the amine component comprises an alkoxylated fatty amine or an alkoxylated fatty amine mixture. The ethoxylates are particularly preferred. Use is made in particular of alkoxylates of amines based on naturally occurring fatty acids, such as tallow fatty amines, for example, which contain predominantly saturated and unsaturated C₁₄, C₁₆ and C₁₈ alkylamines, or cocoamines, containing saturated, mono- and diunsaturated C₆-C₂₂, preferably C₁₂-C₁₄ alkylamines.

Copolymerization of the above-mentioned esters, monoesters and diesters generally brings about a reduction in the surface tension of the compositions.

The esterification for preparing the above-described esters, monoesters and diesters takes place in accordance with customary techniques. To prepare esters of unsaturated monocarboxylic acids, the free acids or suitable derivatives, such as anhydrides, halides, e.g., chlorides, and C₁ to C₄ alkyl esters may be used. The preparation of monoesters of unsaturated dicarboxylic acids takes place preferably starting from the corresponding dicarboxylic anhydrides. The reaction is preferably effected in the presence of a catalyst, such as a dialkyl titanate or an acid, such as sulfuric acid, toluenesulfonic acid, or methanesulfonic acid, for example. The reaction takes place generally at reaction temperatures from 60 to 200°C. In accordance with one appropriate embodiment, the reaction takes place in the presence of an inert gas, such as nitrogen. Water formed during the reaction may be removed from the reaction mixture by means of appropriate measures, such as distillation. The reaction may take place if desired in the presence of customary polymerization inhibitors. Essentially, the esterification reaction may be conducted to completion or just to a partial conversion. If desired, one of the ester components, preferably the hydroxyl-containing amine, may be used in excess. The extent of esterification may be determined by means of infrared spectroscopy.

In one preferred embodiment, the unsaturated esters, monoesters or diesters are prepared and further reacted to the copolymers without isolation of the esters, the reactions preferably taking place in succession in the same reaction vesssel.

To prepare the copolymers it is preferred to use a reaction product of a dicarboxylic anhydride, preferably maleic anhydride, and one of the above-described hydroxyl-containing amines.

The polymers may advantageously also be prepared by means of polymer-analogous reaction. For this purpose a polymer incorporating from 80 to 100% by weight of at least one ethylenically unsaturated mono- and/or dicarboxylic acid may be reacted with at least one hydroxyl-containing amine.

Suitable ethylenically unsaturated mono- and dicarboxylic acids are those mentioned above. Suitable amines having at least one hydroxyl group are likewise as mentioned above. In the polymer suitable for polymer-analogous reaction, the acids may, if desired, be present wholly or partly in the form of a derivative, preferably a C₁ to C₆ alkyl ester.

In one suitable embodiment, the copolymers incorporate as further monomer at least one compound selected from olefins, preferably ethylene, propene, n-butene, isobutene and/or diisobutene, vinylaromatic compounds, preferably styrene, esters of α,β-ethylenically unsaturated mono- and/or dicarboxylic acids with C₁ to C₂₂ alkanols, preferably (meth)acrylic esters, and mixtures thereof.

Preferred further monomers are
- linear and branched-chain 1-olefins or cyclic olefins such as ethylene, propene, butene, isobutene, diisobutene, pentene, cyclopentene, hexene, cyclohexene, octene, and 2,4,4-trimethyl-1-pentene, alone or mixed with 2,4,4-trimethyl-2-pentene, C₈ to C₁₀ olefin, 1-dodecene, C₁₂ to C₁₄ olefin, octadecene, 1-eicosene (C₂₀), C₂₀ to C₂₄ olefin; oligoolefins prepared with metallocene catalysis and having a terminal double bond, such as oligopropene, oligohexene and oligooctadecene; olefins prepared by cationic polymerization and having a high α-olefin content, such as polyisobutene, for example;
- esters of preferably C₃ to C₆ α,β-monoethylenically unsaturated mono- or dicarboxylic acid, such as acrylic acid, methacrylic acid, maleic acid, fumaric acid, and itaconic acid, with C₁-C₁₂, preferably C₁-C₈ alkanols. Such esters are in particular methyl, ethyl, n-butyl, isobutyl, tert-butyl, n-pentyl, isopentyl and 2-ethylhexyl acrylate and/or methacrylate;
- vinylaromatic compounds, preferably styrene, α-methylstyrene, o-chlorostyrene, vinyltoluenes and mixtures thereof.

Particularly preferred further monomers are ethylene, propene, isobutene, diisobutene, styrene, methyl (meth)acrylate, ethyl (meth)acrylate, n-butyl (meth)acrylate, 2-ethylhexyl (meth)acrylate, and mixtures thereof. The copolymers are prepared preferably by free-radical addition polymerization in bulk or in solution.

Preparation in solution polymerization takes place generally in water as solvent. It is, however, also possible for water-miscible organic solvents, such as alcohols and ketones, e.g., methanol, ethanol, n-propanol, isopropanol, n-butanol, acetone or methyl ethyl ketone, to be present in a proportion of up to approximately 30% by volume.

The polymerization is preferably conducted in the presence of compounds which form free radicals (initiators). The amount required of these compounds is preferably from 0.05 to 10, with particular preference from 0.2 to 5% by weight, based on the monomers used in the polymerization.

Examples of suitable polymerization initiators are peroxides, hydroperoxides, peroxodisulfates, percarbonates, peroxo esters, hydrogen peroxide, and azo compounds. Examples of initiators, which can be soluble in water or else insoluble in water, are hydrogen peroxide, dibenzoyl peroxide, dicyclohexyl peroxodicarbonate, dilauroyl peroxide, methyl ethyl ketone peroxide, di-tert-butyl peroxide, acetylacetone peroxide, tert-butyl hydroperoxide, cumene hydroperoxide, tert-butyl perneodecanoate, tert-amyl perpivalate, tert-butyl perpivalate, tert-butyl perneohexanoate, tert-butyl per-2-ethylhexanoate, tert-butyl perbenzoate, lithium, sodium, potassium and ammonium peroxodisulfates, azodiisobutyronitrile, 2,2'-azobis(2-amidinopropane) dihydrochloride, 2-(carbamoylazo)isobutyronitrile, and 4,4'-azobis(4-cyanovaleric acid). The known redox initiator systems as well, such as H₂O₂/ascorbic acid or tert-butyl hydroperoxide/sodium hydroxymethanesulfinate, for example, can be used as polymerization initiators.

The initiators can be employed alone or in a mixture with one another, examples being mixtures of hydrogen peroxide and sodium peroxodisulfate. For polymerization in an aqueous medium it is preferred to use water-soluble initiators.

In addition to the above-described carboxyl-containing polymers, the heat-curable aqueous compositions according to the fourth embodiment further comprise at least one β-hydroxylamine of relatively high functionality. The weight ratio between copolymer and β-hydroxyalkylamine is preferably from 1:1 to 1:0.01, more preferably from 1:1 to 1:0.1.

Appropriate higher-functional β-hydroxyalkylamines include preferably compounds of the formula 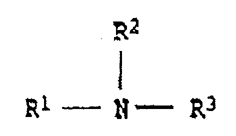 where R¹ is a hydrogen atom, a C₁ to C₁₀ alkyl group, a C₁ to C₁₀ hydroxyalkyl group, or a radical of the formula IV

-(CH₂CH₂O)ₓ(CH₂CH(CH₃)O)_{y}-H (IV)

where
in the formula IV the sequence of the alkylene oxide units is arbitrary and x and y independently of one another are integers from 0 to 100, the sum of x and y being > 1, and R² and R³ independently of one another are a C₁ to C₁₀ hydroxyalkyl group.

With particular preference, R² and R³ independently of one another are a C₂ to C₅ hydroxyalkyl group and R¹ is a hydrogen atom, a C₁ to C₅ alkyl group or a C₂ to C₅ hydroxyalkyl group.

Particular preference is given to diethanolamine, triethanolamine, diisopropanolamine, triisopropanolamine, methyldiethanolamine, butyldiethanolamine and methyldiisopropanolamine, especially triethanolamine.

Further preferred β-hydroxyalkylamines are the amines disclosed as component A in DE-A-19621573. They include preferably linear or branched aliphatic compounds containing per molecule at least two functional amino groups of type (a) or (b) 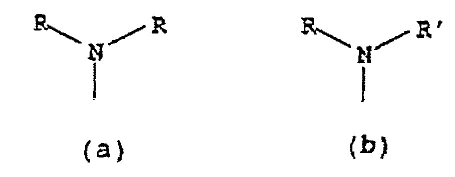 where R is hydroxyalkyl and R' is alkyl, preferably a compound of formula I 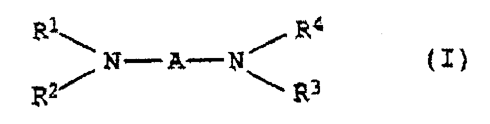 where
A is C₂-C₁₈ alkylene substituted or unsubstituted by one or more groups selected independently of one another from alkyl, hydroxyalkyl, cycloalkyl, OH and NR⁶R⁷, R⁶ and R⁷ independently of one another being hydrogen, hydroxyalkyl or alkyl, and which is uninterrupted or interrupted by one or more oxygen atoms and/or NR⁵ groups, R⁵ being hydrogen, hydroxyalkyl, (CH₂)ₙNR⁶R⁷, where n is from 2 to 5 and R⁶ and R⁷ are as defined above, or alkyl, which may in turn be interrupted by one or more NR⁵ groups, R⁵ possessing the above-mentioned definitions, and/or substituted by one or more NR⁶R⁷ groups, R⁶ and R⁷ possessing the above-mentioned definitions;
or A is a radical of the formula: 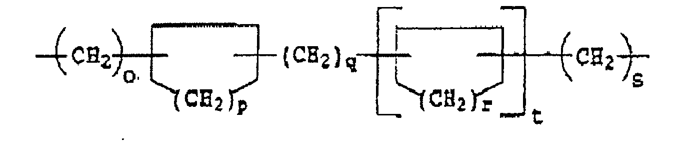
where
o, q and s independently of one another are 0 or an integer from 1 to 6,
p and r independently of one another are 1 or 2, and
t is 0, 1 or 2,
it also being possible for the cycloaliphatic radicals to be substituted by 1, 2 or 3 alkyl radicals, and
R¹, R² and R³ and R⁴ independently of one another are hydrogen, hydroxyalkyl, alkyl or cycloalkyl.

Preferred β-hydroxyalkylamines of relatively high functionality are, in particular, at least doubly ethoxylated amines having a molar weight of less than 1000 g/mol, such as diethanolamine, triethanolamine and ethoxylated diethylenetriamine, for example, preferably an ethoxylated diethylenetriamine, in which on average all nitrogen-attached hydrogen atoms are monoethoxylated.

In one suitable embodiment, the heat-curable aqueous composition of the invention comprises at least one surfactant, which may but need not necessarily be identical with the above-described hydroxy-containing amine.

If the compositions according to the fourth embodiment comprise as at least one additional surfactant at least one amine which corresponds to the hydroxyl-containing amines used above to prepare the esters and monoesters, then this amine may if desired be added separately to the compositions or may be used in an appropriate excess during the preparation of said esters.

As additional surfactants, the compositions preferably comprise from 0 to 50% by weight, preferably from 0.1 to 40% by weight, based on the copolymer, of at least one surface-active, alkoxylated, preferably ethoxylated or propoxylated, alkylamine. Preferred alkylamines are the alkylamines of the formula R^{c}NR^{a}R^{b}, as defined above, which are also present in the copolymer, particular preference being given to alkylamines of the formula 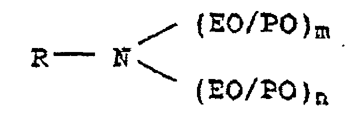 where R is an alkyl, alkenyl or alkylvinyl radical having at least 6 carbon atoms and m and n independently of one another are ≥ 1. Preferred radicals R have 8 to 22 carbon atoms.

Further suitable long-chain amines are also for example the ethoxylated amines sold by AKZO as Ethomeen®, such as Ethomeen® C/15, a poly-oxyethylene-(5)-cocoamine, or Ethomeen® S/12, an oleylbis(2-hydroxyethyl)amine, or Ethomeen® T/25, a polyoxyethylene-(15)-tallowamine.

Preferred additional surfactants are ethoxylated long-chain mono- and diamines. To prepare the novel compositions use may also be made, however, of other long-chain primary, secondary or tertiary aliphatic amines. Examples are the AKZO products Armeen® DMOD (oleyldimethylamine), Armeen® M2C (dicocomethylamine), Armeen® NCMD (N-cocomorpholine), Armeen® 2C (Dicocoamine) or Armeen® 12D (n-dodecylamine).

If desired, the compositions according to the fourth embodiment may further comprise at least one additional crosslinker. Preference is given to amine or amide crosslinkers which contain at least two hydroxyl groups. Preferred crosslinkers are the alkanolamines described in DE-A-19729161, especially the β-hydroxy-alkylamides described in US-A-5,143,582, of the formula

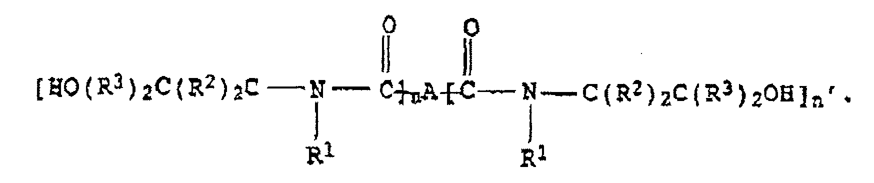

Particularly preferred β-hydroxyalkylamides are those in which R¹ is hydrogen, a lower alkyl, or HO(R³)₂C(R²)₂C-, n and n' are each 1, -A- is -(CH₂)ₘ-, m is from 0 to 8, preferably from 2 to 8, R² both are hydrogen, and in each case one of the R³ groups is hydrogen and the other is hydrogen or a C₁-C₅ alkyl.

As described in DE-A-19949591, the compositions are prepared preferably by solution polymerization in order to obtain a carboxyl-containing copolymer, followed by addition of the other components of the composition. The solution polymerization preferably takes place in water. Alternatively, it is possible to use water-miscible organic solvents, such as alcohols and ketones, e.g., methanol, ethanol, acetone, and their mixtures with water.

A typical process for preparing the compositions comprises
i) reacting at least one ethylenically unsaturated monocarboxylic acid or derivative thereof and/or at least one ethylenically unsaturated dicarboxylic acid or a derivative thereof with at least one hydroxyl-containing amine in an esterification reaction,
ii) reacting the reaction product(s) from step i) with at least one ethylenically unsaturated mono- and/or dicarboxylic acid and/or anhydrides thereof and, if desired, at least one further monomer, to give a carboxyl-containing copolymer, and
iii) mixing the copolymer from step ii) with at least one β-hydroxyalkylamine of relatively high functionality, if desired, at least one surfactant, and, if desired, further additives.

Among the four types of MMVF binders described above, the binder according to the first embodiment is particularly preferred owing to its excellent properties.

### Other components of binder composition

The binder compositions according to all four embodiments of present invention may additionally comprise one or more conventional binder additives. These include, for instance, curing accelerators such as, e.g., β-hydroxyalkylamides; the free acid and salt forms of phosphoric acid, hypophosphorous acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, hypophosphorous acid, phosphonic or phosphinic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as carbohydrates, clay, silicates and magnesium sulfate; pigments such as titanium dioxide; hydrophobizing agents such as fluorinated compounds, mineral oils and silicone oils; flame retardants; corrosion inhibitors such as thiourea; urea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

### Final binder composition

The binder according to the present invention preferably has a solids content of from 10 to 40 wt.%. This is often the concentration range of the binder in storage containers before use.

In a form ready for application, the aqueous binder composition preferably has a solids content of from 1 to 20 wt.%.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of the polymeric binder component (lower reaction temperature, stopping the reaction by adding water at an earlier reaction stage, etc.), and by properly adjusting the relative amounts of the binder components and water solvent.

### Mineral wool layer

For producing the mineral wool layer of the mineral wool composite molding of the present invention, the formaldehyde-free aqueous binder composition may be applied to the mineral fibres or mineral fibre products by conventional techniques such as, e.g., air or airless spraying, rotating disc atomization, padding, saturating, roll coating, curtain coating, beater deposition, or the like.

The mineral fibres may be any of man-made vitreous fibres (MMVF), glass fibres, ceramic fibres, basalt fibres, slag wool, rock wool, stone wool and others.

For the manufacture of the mineral wool layer, the polymeric binder is normally applied in an amount of 0.1 to 15 %, preferably 2 to 8 % by weight, of the bonded mineral wool product on a dry basis.

In general, the binder composition is applied, normally by spraying, immediately after fiberization of the mineral melt whereupon the coated mineral wool is dried in an oven wherein heated air is passed through the mineral wool web. The bonded mineral wool product emerging from the dryer in the form of a batt may be cut and processed into the desired form, for instance, in the form of a mat, batt, slab, sheet, woven, knitted, nonwoven or other shape.

The mineral wool layer according to the present invention preferably has a weight per unit area of from about 300 to about 5.000 g/m², preferably about 500 to about 4.000 g/m², and more preferably about 600 to about 2000 g/m².

### Other composite layers

For producing the mineral wool composite moldings according to the present invention, the mineral wool layer is combined or laminated with one or more other composite layer(s) preferably selected from sheets, films or foils of metals such as aluminium foils; polymers, for instance, polyolefins such as polyethylene and polypropylene, polyvinyl chloride, polyesters, polyamides; plastics, including foams, e.g., polyurethane foams and melamine resin foams; synthetic resins such as acrylate, acrylamide, aramid and melamine resins; glass layers, e.g. glass fibre tissue; ceramics; carbon, paper, wood, natural fibres, synthetic fibers and mixtures of these materials.

These materials are often employed in the form of textile sheet structures, such as, e.g., wovens, knitteds, or nonwovens, composed of fibres or shavings or a mixture thereof. An example of these structures is provided by wet- or air-laid or carded nonwovens. The nonwovens may, by way of example, be composed of natural or synthetic fibres, or of mixtures of natural and synthetic fibres, or else of shavings composed of wood. Examples of natural fibres are fruit fibres, seed fibres, and stalk fibres, for example sisal, jute, hemp, kenaf, flax, cellulose, and cotton, and also banana fibres, wool, hair, and cork. Examples of synthetic fibres are fibres composed of polyester, of polyacrylonitrile, of polyamide, of carbon, of polyvinyl chloride, of polyolefins, such as polyethylene and polypropylene, or else of aramid, and inorganic fibres, such as mineral fibres, ceramic fibres and glass fibres. The preferred starting material is non-bonded nonwovens composed of renewable raw materials, such as hemp, kenaf, sisal, jute, or flax, or a mixture of these fibres with one another, e.g. a mixture composed of hemp and kenaf, or a mixture composed of hemp and flax or, respectively, jute. Another preferred embodiment of the invention uses a mixture composed of natural fibres and of synthetic fibres, such as polyester fibres, aramid fibres, carbon fibres, or polyolefin fibres, or a mixture composed of synthetic fibres and glass fibres, e.g. a mixture composed of polyester fibres and glass fibres. Other interesting mixtures are those composed of natural fibres, such as sisal or hemp, together with synthetic fibres, such as polyester fibres and/or glass fibres. If natural fibres are used in the sheet-like fibre structures, their proportion is preferably more than 50% by weight, e.g. from 55 to 75% by weight.

In order to achieve superior static strength of the composite, the mineral wool layer(s) may be laminated with Sheet Molding Compounds (SMC) as composite layers.

For improved handling, it is also possible to use needle-punched mineral wool layers and/or other non-woven composite layers.

The mineral wool composite moldings according to the present invention may comprise two, three, four, five, six or more composite layers. In one embodiment, a mineral wool core layer is enveloped by a carbon fibre fleece (for high-temperature applications) or a synthetic fibre (e.g. polyester) fleece (for normal temperature applications).

### Manufacture of the composite

In accordance with the invention, the mineral wool composite moldings are preferably manufactured by first producing a semifinished "green product" from the mineral wool component (e.g. in layer form) and, if appropriate, one or more other composite components (e.g. layers).

To that end, the mineral wool layer is treated in a manner as described above with a formaldehyde-free aqueous binder composition, and the non-cured bonded mineral wool layer is placed on a carrier sheet serving as the other composite layer, for instance, a polyolefin film, paper, glass fibre tissue or the like. Alternatively, the non-cured bonded mineral wool component may be inserted into a tubular film, e.g., a PE blown film, or combined on one or both surfaces with a composite layer, such as, e.g. a nonwoven consisting of carbon fibres or polyester fibres. These other composite layers may be either loosely combined with the non-cured bonded mineral wool component or adhered to it by means of a suitable adhesive, e.g., a polyurethane resin, epoxy resin, a thermosetting adhesive or one of the formaldehyde-free binders described above.

While normally no separate drying step is required, the mineral wool component or semifinished product may be dried before packaging to a moisture content of from 0.1 to 10% by weight, preferably from 1 to 5% by weight. This optional drying step is preferably carried out at a temperature at which the binders remain uncured, meaning that the temperature is below the crosslinking temperature of the binders.

The semifinished product thus obtained may then be wrapped up or packaged for transport and sale. If its thickness is appropriate, the semifinished product is in the form of a flexible mat which can be rolled up. The semifinished product may be cut into individual mats, for example, or be stored in the form of rolls.

The semifinished product should have adequate storage capability to be stored for at least 3 months and up to one year or longer without deterioration of its properties.

The semifinished product may be used in the factory in which it was produced, or else be processed at another site to give the inventive moldings, after shipping to a producer of finished parts. To this end, the semifinished product is molded, e.g. in a hot press, with deformation at a temperature which is above the temperature at which the binders crosslink. The temperatures needed for producing the moldings vary, depending on the nature of the binder and on the heating time. The semifinished product is preferably heated in a press to a temperature in the range from about 100°C to about 300°C, preferably from about 150 to 250°C., for shaping and curing of the binders.

The articles obtained in accordance with the present invention are cured, rigid moldings which have thermoset properties. The moldings have a decorative surface and can therefore be used directly without further coating or lamination, although, of course, a finishing layer may be applied, if desired.

The moldings obtainable by the inventive process are suitable for use in automobiles, trucks, busses, trains and other ground vehicles, in aircrafts and water crafts, especially in the interior of such vehicles. They may be used, for instance, for all lining and fitting elements of car interiors such as, for example, the self-supporting lining for the cabin roof (headliner), the door panels, trim panels, instrument panels, dashboards, side rails, rear shelf, boot or hatchback-door linings, sun-shields, spectacle cases, parcel shelves and generally all lining and fitting elements of car interiors, for which certain requisites must be satisfied such as lightness, self-supporting properties, acoustic insulation and/or flexibility.

Owing to their high thermal stability they are also useful in applications which involve exposure to increased temperatures such as, for instance, as acoustic and/or thermal insulation of exhaust systems and engine-hoods and other parts in the engine compartment of motor vehicles, e.g. as heat shields or exterior dashboards.

In view of their advantageous properties, the mineral wool composites according to the present invention are also suitable for use in other fields, for instance, as parts of domestic appliances (refrigerators, dish washers, washing machines, driers, ovens, stoves, etc.) and of heating systems (convectors, stoves, air-conditioners, etc.). Further application fields are as packing material, such as crates and boxes, in the decorative sector, as single-use tableware, office accessories, as trays, as decorative parts in the furniture industry, or else inserts in closets, or drawers, or for rear walls of furniture and chimney barriers.

Although the foregoing description and the appending claims use the term "layer" in conjunction with the mineral wool and other composite components, it is understood that the invention is not limited to two-dimensional, planar structures but is applicable to and encompasses any three-dimensional structures wherein at least one mineral wool composite component is combined with at least one other composite component.

## Claims

1. A mineral wool composite molding comprising one or more mineral wool layers based on man-made vitreous fibres (MMVF) which are bonded by a formaldehyde-free polymeric binder system, and at least one other composite layer.

2. The mineral wool composite molding of claim 1 wherein the man-made vitreous fibres are selected from glass wool, glass filaments, ceramic fibres, basalt fibres, slag wool, stone wool and rock wool.

3. The mineral wool composite molding of claim 1 or 2 wherein the formaldehyde-free polymeric binder system the water-soluble reaction product of an alkanolamine with a carboxylic anhydride obtainable by reacting at least one alkanolamine with at least one carboxylic anhydride and, optionally, treating the reaction product with a base.

4. The mineral wool composite molding of claim 1 or 2 wherein the formaldehyde-free polymeric binder system comprises:
(a) a polyacid component having acid groups, or anhydride or salt derivatives thereof; and
(b) a polyhydroxy component having hydroxyl groups;
wherein the pH of the binder composition is greater than about 7 and is preferably within the range of from about 7 to about 10.

5. The mineral wool composite molding of claim 4 wherein the ratio of the number of molar equivalents of acid groups, or anhydride or salt derivatives thereof, present on the polyacid component to the number of molar equivalents of hydroxyl groups present on the polyhydroxy component is in the range from about 0.6 : 1 to about 1.2 : 1.

6. The mineral wool composite molding of claim 1 or 2 wherein the formaldehyde-free polymeric binder system comprises a heat-curable aqueous composition comprising
- at least one carboxyl-containing addition copolymer synthesized from
- 50 to 99.5% by weight of at least one ethylenically unsaturated mono- and/or dicarboxylic acid,
- 0.5 to 50% by weight of at least one ethylenically unsaturated compound selected from esters of ethylenically unsaturated monocarboxylic acids and monoesters and diesters of ethylenically unsaturated dicarboxylic acids with an amine having at least one hydroxyl group,
- up to 20% by weight of at least one further monomer,
- at least one β-hydroxyalkylamine of relatively high functionality, and
- if desired, at least one surfactant.

7. The mineral wool composite molding of any one of claims 1 to 6 wherein the formaldehyde-free polymeric binder system is applied in an amount of 0.1 to 15 % by weight of the bonded mineral wool layer on a dry basis.

8. The mineral wool composite molding of any one of claims 1 to 7 wherein the other composite layer(s) is (are) selected from layers or films formed of metals, polymers, plastics, glass, ceramics, carbon, paper, wood, natural fibres, synthetic fibers and mixtures of these materials.

9. A semifinished product suitable for manufacturing a mineral wool composite molding according to any one of claims 1 to 8, wherein the formaldehyde-free polymeric binder system is non-cured or incompletely cured.

10. A method of producing a mineral wool composite molding according to any one of claims 1 to 8, which comprises combining one or more mineral wool layers based on man-made vitreous fibres (MMVF) which are bonded by a formaldehyde-free polymeric binder system and at least one other composite layer to form an non-cured or incompletely cured semifinished product, and molding the semifinished product in a mold employing heat and pressure conditions appropriate for shaping and curing the product.

11. Automotive interior or exterior parts comprising a mineral wool composite molding according to any one of claims 1 to 8 or produced in accordance with claim 10.

12. Appliances comprising a mineral wool composite molding according to any one of claims 1 to 8 or produced in accordance with claim 10.

13. Heating systems comprising a mineral wool composite molding according to any one of claims 1 to 8 or produced in accordance with claim 10.
